# EUROPEAN PATENT APPLICATION

(11) **EP 1 947 353 A2**
(43) Date of publication of application: **23.07.2008**
(21) Application number: 07109896.6
(22) Date of filing: 08.06.2007
(51) Int. Cl.: F16C 3/10

(54) **Crankshaft with reinforcing member**

(30) Priority: 16.01.2007 KR 20070004932
(71) Applicant: Samyoung Machinery Co., Ltd, Daedeok-gu, Daejeon (KR)
(72) Inventor: Han, Geum Tai, Yuseong-gu Daejeon (KR)
(74) Representative: Peckmann, Ralf

(57) **Abstract**

Disclosed herein is a hollow-type crankshaft for use in an internal combustion engine and a reciprocal type air compressor, which includes a crankshaft web for connecting a crankshaft journal to a crankshaft pin, the crankshaft comprising: a reinforcing groove portion (4) formed on the outer peripheral surfaces of the crankshaft pin (1) and the crankshaft journal (2), and formed with a slope portion (41) inclined inwardly from both lateral walls of thereof, and a reinforcing member (40) made of metal different from the basic material, the reinforcing member being inserted into, melt-jointed and cast in the reinforcing groove portion (4).

## Description

### BACKGROUND OF THE INVENTION

### Field of the Invention

The present invention relates to a hollow-type crankshaft for converting reciprocal movement into rotational movement, and more particularly, to a hollow-type crankshaft manufactured by forming a reinforcing groove portion on outer peripheral surfaces of a crankshaft pin and a crankshaft journal, inserting a different kind of rigid metal into the reinforcing groove portion, and melt-jointing and casting them.

The devised crankshaft has an improved rigidity against the bending load, the shearing load, and the twist load, so that various advantages can be achieved, such as the reliability of a part of the crankshaft can be improved, the structure of the cast iron (cast steel, and ductile cast iron) of the jointing portion, which is a fast-cooling structure of a jointing metal installed at the cast mold, becomes dense, surface defect of the cast product can be removed, productivity can be improved and production cost can be reduced in comparison with conventional forging crankshaft.

### Background of the Related Art

In general, a conventional crankshaft is an important part, which is supported by a main bearing disposed in a crankshaft case, for converting linear movement of a piston, which is produced in the dynamic stroke of respective cylinder, into rotational movement by means of a connection rod, thereby transferring the engine output to the outside, and comprises a crankshaft web connecting a crankshaft journal with a crankshaft pin, the crankshaft pin connected to large end portion of the crankshaft for converting the reciprocal movement of the piston into the rotational movement, and a crankshaft journal disposed in a crankcase for operating as a central axis around which the crankshaft rotates.

However, the conventional forging type crankshaft has disadvantages that working process was complicated because several forging steps were required after the ingot casting, the productivity was low and the production cost was high because the machining of the material after the forging was difficult.

Second, while the crankshaft was integrally manufactured of spheroidizing graphite cast iron devised to improve the rigidity thereof, however, according to the method, the rigidity of the cast iron was low and it was weak to the shock in comparison with the forging steel, and a ratio of the inferior goods was high due to cast defect produced at the crankshaft journal and the crankshaft pin, in case of using the cast steel and the ductile cast iron for making the crankshaft, and it was difficult to perform the surface heat treatment to reinforce the anti-abrasion property.

Accordingly, the present applicant has repeatedly conducted researches on the crankshaft, as a result, has found that it is possible to manufacture a crankshaft having different metals joined, which can joint a reinforcing member to the outer peripheral surface of the crankshaft, thereby simplifying the manufacturing process and improving the rigidity, and has finally completed the present invention.

### SUMMARY OF THE INVENTION

Accordingly, the present invention has been made in view of the above-mentioned problems occurring in the prior art, and it is a primary object of the present invention to provide hollow-type crankshaft manufactured by forming a reinforcing groove portion on outer peripheral surfaces of a crankshaft pin and a crankshaft journal, inserting a different kind of metal into the reinforcing groove portion as an outer diameter member, and melt-jointing and casting them, so that rigidity and anti-abrasion property of the crankshaft can be improved.

Another object of the present invention is to provide a hollow-type crankshaft, in which a slope portion with a ladder shape, which defines a section having a slope surface with a narrower outside portion and a wider inside portion, are formed at an inner side of the reinforcing groove portion, so that the reinforcing member can be firmly secured to the crankshaft without being separated there-from.

Still another object of the present invention is to provide a hollow-type crankshaft, in which a thickness of the reinforcing member is constructed to be a ratio of 4% to 10% with respect to an entire outer diameter of the crankshaft.

To accomplish the above objects of the present invention, according to the present invention, there is provided crankshaft for use in an internal combustion engine and a reciprocal type air compressor and for converting reciprocal movement into rotational movement, which includes a crankshaft web for connecting a crankshaft journal to a crankshaft pin, a crankshaft pin connected to a large end portion of a connecting rod for converting reciprocal movement of a piston into rotational movement, and a crankshaft journal supported in a crankcase for operating as a center axis of the rotational movement, wherein a reinforcing groove portion is formed on the outer peripheral surfaces of the crankshaft pin and the crankshaft journal, a slope portion is formed at the reinforcing groove portion in such a manner as to be inclined inwardly from both lateral walls of the reinforcing groove portion, and a reinforcing member made of metal different from the basic material of the crankshaft is inserted into, melt-jointed and cast in the reinforcing groove portion.

Furthermore, according to the present invention, the slope portion is formed into a ladder-shaped section, which has an inclination surface with a narrower outside portion and a wider inside portion, and a thickness of the reinforcing member is constructed to be a ratio of 4% to 12% with respect to an entire outer diameter of the crankshaft pin.

Moreover, in the present invention, an inside corner portion of the reinforcing member is machined to be round to prevent the occurrence of cracks previously.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG.1 is a perspective view of a crankshaft of the present invention;

FIG. 2 is a front cross-sectional view of the crankshaft of the present invention;

FIG. 3 is a cut-off perspective view of the crankshaft of the present invention.

### DETAILED DESCRIPTION OF THE PREFERRED EMBODIMENT

Hereinafter, the neck rest for a chair of the present invention will be described in detail with reference to the appended drawings.

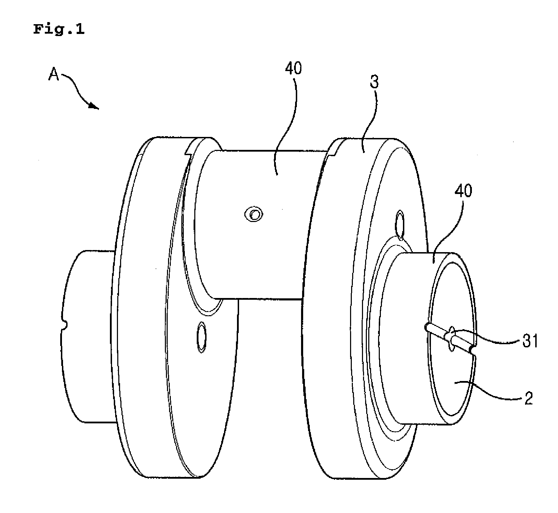

FIG. 1 is a perspective view of a crankshaft of the present invention. As shown in the drawing, the crankshaft 10 of the present invention comprises a crankshaft pin 1 connected to a large end portion of a connecting rod for converting reciprocal movement of a piston into rotational movement, a crankshaft journal 2 operating as a central axis of the rotational movement in a crankshaft case, and a crankshaft web 3 for connecting the crankshaft journal 2 and the crankshaft pin 1.

With regard to the reinforcing member49 disposed at outer side of the crankshaft A, the crankshaft pin 1 of the reinforcing member 40 is formed to have a round diameter and the crankshaft web 3 is formed to be oval shape, so that an upper portion and a portion of the center of the reinforcing member40 engaged with the crankshaft pin 1 are shown in the outside, and lower portion of the reinforcing member 40 is not shown in the outside because it is engaged with an inner side of the crankshaft web.

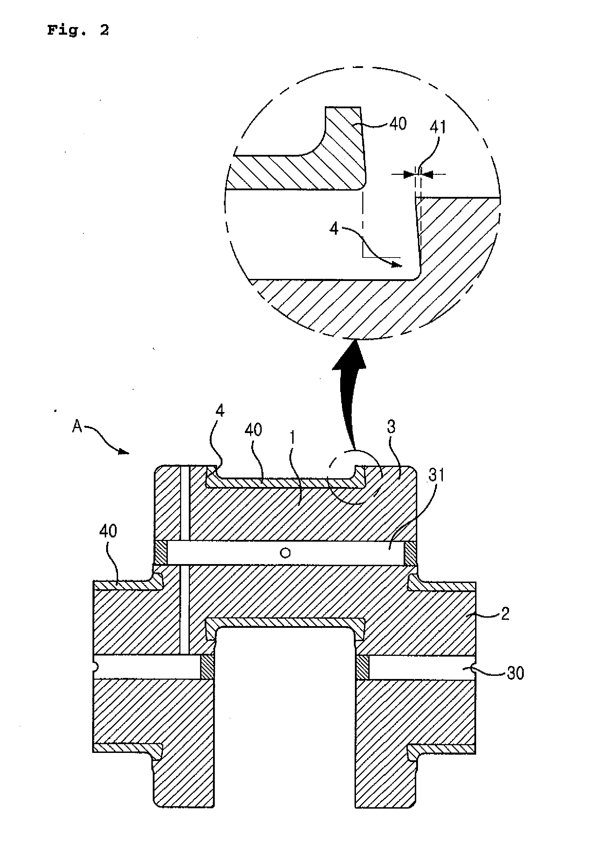

FIG. 2 shows a front cross-section of the crankshaft of the present invention. As shown in FIG. 2, a hollow member 30 of a pipe shape is intermediary disposed at the inside and the reinforcing member 40 is intervened at the outer portion of the crankshaft pin 1 and the crankshaft journal 2 to form a hollow portion 31 at the inner portion of the crankshaft pin 1 and the crankshaft journal 2 at the time of casting the crankshaft A.

In this instance, a distal end of the reinforcing member 40 is curved to be inserted into the inside portion so that the reinforcing member 40 cannot be separated from its position, and an edge portion of the reinforcing member 40 is machined to be round before it is intervened so that a dendrite structure may not be produced at the sharp corner portion of the reinforcing member 40 to the melting material at the time of the jointing by casting. In this regard, the thickness of the reinforcing member 40 is preferably formed to be 4% to 8% of the thickness of the crankshaft pin 1 and the crankshaft journal 2 in proportion as the diameter of them.

In addition, the crankshaft with a different jointing member may be made of spheroidizing graphite cast iron, cast steel, and gray cast iron, however, it is particularly preferable to use spheroidizing graphite cast iron or cast steel.

Meanwhile, in an enlarged portion denoted by dotted circle shown in FIG. 2, a reinforcing groove portion 4 is formed at the outer peripheral surface of the crankshaft A to have a slant surface inclined from the inside to the outside direction so that the reinforcing member 40 can be jointed into it and prevented to be separated there-from. As a result, a slope portion 41 is formed inclined inwardly from both lateral walls of the reinforcing groove portion 4 so that it is provided with a slant surface formed to be wider at the inside thereof and narrower at the outside thereof.

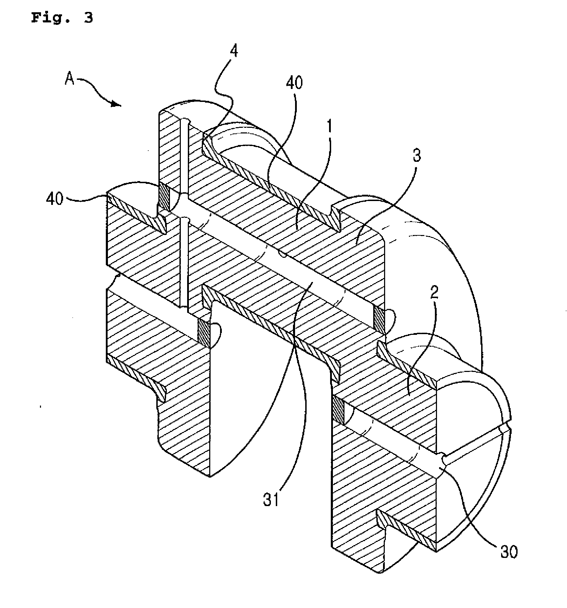

FIG. 3 is a cut-off perspective view of the crankshaft of the present invention. As shown in the drawing, an oil through-hole is formed at the central hollow portion, and separate caps are disposed at groove portions formed at both sides of the hollow portion.

As described above, in the crankshaft A of the present invention, the reinforcing member 40 with a high rigidity is jointed to the outside of the crankshaft pin 1 to form the outer diameter of the crankshaft thereby substantially improving the strength of the crankshaft A. Hereinafter, the operation of the crankshaft of the present invention will be described below.

In general, the crankshaft A is disposed in the crankcase, and is operated to transfer the reciprocal movement of the piston produced from the dynamic stroke of the respective cylinder to the outside after converting it into the rotation movement, and operated to transfer movement to the piston at the time of suction, compression, explosion, and discharge stroke. Therefore, reviewing the requirement for the crankshaft, it should rotate smoothly with maintaining a dynamic and static balance, in particular, it is required to have a sufficient rigidity and a big anti-abrasion property to lengthen the durability because it is rotated at high speed with suffering big load and impact.

In other words, since the crankshaft A with jointing different metal at the outer peripheral surface thereof of the present invention, is manufactured such that the reinforcing member 40 is intervened at the outside of the crankshaft journal 2, it has higher rigidity and anti-abrasion property in comparison with the crankshaft A made of cast steel or spheroidizing cast iron, and has reduced its production cost in comparison with the crankshaft A manufactured by forging.

The crankshaft A with jointing different metal at the outer peripheral surface of the present invention acts as a chill for the jointing metal disposed in the mold in addition to the basic feature of the crankshaft A with jointing different metal at the outer peripheral surface.

In addition, the crankshaft A of the present invention is constructed to be easy in the performing of the surface heat treatment of the crankshaft pin or the crankshaft journal in comparison with the crankshaft entirely made of cast steel or spheroidizing graphite cast iron.

Accordingly, while the conventional crankshaft, which was manufactured by forging, has disadvantages that the resource cost for the product could be increased according to the high mold price, it was difficult to produce several kinds at small amount, and the production cost was high because the manufacturing process was complicated, however, according to the crankshaft with melt-jointing different metal at the outer peripheral surface, it is possible to produce several kinds of the product at small amount, and to manufacture a high quality reliable crankshaft at low production cost by improving the productivity.

Moreover, according to the present invention, the stability of the product can be improved by preventing the occurrence of the cracks by means of the melt-jointing of the different metal, as described above, in particular, it provides the advantage that it is possible to produce good products because it is possible to maintain long durability although it was used for a long time, according to the choice of the material of the reinforcing member, as the reinforcing member is jointed to the crankshaft by means of press-fitting structure.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A hollow-type crankshaft for use in an internal combustion engine and a reciprocal type air compressor, which includes a crankshaft web for connecting a crankshaft journal to a crankshaft pin, the crankshaft comprising:
a reinforcing groove portion (4) formed on the outer peripheral surfaces of the crankshaft pin (1) and the crankshaft journal (2), and formed with a slope portion (41) inclined inwardly from both lateral walls of thereof, and
a reinforcing member (40) made of metal different from the basic material, the reinforcing member being inserted into, melt-jointed and cast in the reinforcing groove portion (4).

2. The hollow-type crankshaft according to claim 1, wherein the slope portion (41) is formed into a ladder-shaped section, which has an inclination surface with a narrower outside portion and a wider inside portion.

3. The hollow-type crankshaft according to claim 1 or 2, wherein a thickness of the reinforcing member (40) is constructed to be a ratio of 4% to 12% with respect to entire outer diameter of the crankshaft pin (1).

4. The hollow-type crankshaft according to claim 3, wherein an inside corner portion of the reinforcing member (40) is machined to be round.
